# EUROPÄISCHE PATENTANMELDUNG

(11) **EP 3 858 751 A1**
(43) Veröffentlichungstag der Anmeldung: **04.08.2021**
(21) Anmeldenummer: 21154642.9
(22) Anmeldetag: 01.02.2021
(51) Int. Cl.: B65D 1/26, B65D 3/10, B65D 3/28, B65D 5/20, B65D 5/28, B65D 25/36

(54) **SCHALEN- ODER BECHERFÖRMIGER VERPACKUNGSBEHÄLTER**

(30) Priorität: 02.02.2020 DE 102020102544
(71) Anmelder: Van Genechten Packaging N.V., 2300 Turnhout (BE)
(72) Erfinder: Engel, Gottfried, 87452 Altusried (DE)
(74) Vertreter: Patentanwaltzkanzlei Hutzelmann

(57) **Zusammenfassung**

Schalen- oder becherförmiger Vepackungsbehälter (1) aus Karton, hergestellt aus einem ein oder mehrteiligen Kartonzuschnitt als Außenteil (3), wobei ein Innenbecher (2) aus einem thermoformbaren und/oder tiefziehbaren Material vorgesehen ist, wobei als Material vorzugsweise ein aus nachwachsenden und/oder biologisch abbaubaren Rohstoffen hergestelltes Material vorgesehen ist und daß das Außenteil (3) den Innenbecher (2) am Umfang und am Boden umschließt.

## Beschreibung

Die Erfindung bezieht sich auf einen Schalen- oder becherförmiger Vepackungsbehälter aus Karton, hergestellt aus einem ein oder mehrteiligen Kartonzuschnitt als Außenteil.

Auf der einen Seite sind viele derartige Verpackungen aus Kunststoff bekannt. Vor allem für Joghurt und andere Waren werden diese eingesetzt.

Auf der anderen Seite werden auch Kartonbecher eingesetzt, die jedoch mit Kunststoffen beschichtet sind, damit das Füllgut nicht durch den Karton verunreinigt wird.

Bei der ersten Variante wird viel Kunststoff eingesetzt. Bei der zweiten Variante ist der Kunststoffanteil fest mit dem Karton verbunden, so daß das Verbundmaterial wenn überhaupt nur schwer recycelbar ist.

Der Erfindung liegt daher die Aufgabe zugrunde, einen Verpackungsbehälter vorzuschlagen, der auf der einen Seite stabil ist und beim Transport nicht beschädigt wird und auf der anderen Seite der Kunststoffanteil problemlos oder gar zwangsweise vom Kartonanteil zu trennen ist, so daß beides einer getrennten Wiederverwertung zugeführt werden kann. Zudem ist es wünschenswert, daß der Verpackungsbehälter auf bestehenden Anlagen gefertigt und befüllt werden kann.

Diese Aufgabe wird erfindungsgemäß dadurch gelöst, daß ein Innenbecher aus einem thermoformbaren und/oder tiefziehbaren Material vorgesehen ist, wobei als Material vorzugsweise ein aus nachwachsenden und/oder biologisch abbaubaren Rohstoffen hergestelltes Material vorgesehen ist und daß das Außenteil den Innenbecher am Umfang und am Boden umschließt.

Hierdurch kann mit geringen Kunststoffdicken gearbeitet werden. Der Karton stabilisiert die Verpackung. Kunststoff und Karton gehen keine feste Bindung ein und können leicht voneinander getrennt werden.

Dabei hat es sich als sehr vorteilhaft erwiesen, wenn der Innenbecher aus einem Polymer, insbesondere aus PS, PE, PP, PET, PVC, Stärkepolymeren, Polymilchsäure oder anderen natürlichen oder künstlichen Polymeren ein- oder mehrschichtig auch in Kombination mit Barriereschichtem, Lacken oder dergleichen hergestellt ist.

Alle diese Kunststoffe können je nach Einsatzzweck der Verpackung vorgesehen werden. Der Einsatz von Polymeren aus nachwachsenden Rohstoffen ist ausdrücklich erwünscht.

Weiterhin hat es sich als sehr vorteilhaft erwiesen, wenn der Verpackungsbehälter einen Boden und eine oder mehrere Seitenwände aufweist, wobei das Außenteil den Innenbecher umgreift.

Hierdurch wird der Innenbecher vollständig umschlossen und kann eine deutlich geringere Wandstärke aufweisen wie beispielsweise Becher, die nur mit einem Sleeve versehen sind.

Äußerst vorteilhaft ist es erfindungsgemäß auch, wenn wenigstens eine Kante des Außenteils umgefaltet ausgebildet ist.

Hierdurch wird das Eindringen von Feuchtigkeit oder dergleichen in das Kartonmaterial vermieden.

Ebenfalls sehr vorteilhaft ist es gemäß einer weiteren Ausgestaltung der Erfindung auch, wenn wenigstens eine Kante des Außenteils abgedichtet und/oder feuchtigkeits-, flüssigkeits- und/oder fettunempfindlich ausgerüstet ist.

Auch hierdurch wird ein ungewolltes Beschädigen des Außenteils vermieden.

Eine sehr vorteilhafte Ausgestaltung der Erfindung liegt vor, wenn der Innenbecher in das Außenteil hinein tiefgezogen ausgebildet ist und die Kombination aus Innenbecher und Außenteil erst einen stabilen Verpackungsbehälter bildet.

Innenbecher und Außenteil stabilisieren sich gegenseitig und bilden so den erfindungsgemäßen Verpackungsbehälter.

Dabei hat es sich als sehr vorteilhaft erwiesen, wenn das Außenteil als Bogensegment und einem damit verbundenen Boden ausgebildet ist.

Hierdurch lassen sich vor allem Verpackungsbehälter mit rundem Querschnitt bilden, die sowohl einen konstanten Durchmesser, als auch eine konische Ausbildung aufweisen können.

Ebenfalls sehr vorteilhaft ist es erfindungsgemäß, wenn das Außenteil aus einer Bodenwand mit wenigstens einem daran angelenkten Seitenwandlappen ausgebildet ist.

Damit wird eine einteilige Kartonverpackung runden oder eckigen Querschnitts geschaffen.

Dabei hat es sich als sehr vorteilhaft erwiesen, wenn zwischen Bodenwandlappen und Seitenwandlappen oder zwischen nebeneinander liegenden Seitenwandlappen Verschlußstreifen vorgesehen sind, mit denen diese nebeneinander liegenden Lappen miteinander verbunden werden können.

Mittels dieser Verschlußstreifen kann der Außenbehälter zusammengefügt werden.

Weiterhin hat es sich als sehr vorteilhaft erwiesen, wenn am vom Boden abgewandten Ende der Seitwand bzw. der Seitenwandlappen ein Randflansch bzw. Randflanschabschnitt vorgesehen ist.

Auf diesen Randflansch lässt sich beispielsweise ein Deckel aufsetzen oder aufsiegeln.

Dabei hat es sich als sehr vorteilhaft erwiesen, wenn mehrere nebeneinander liegende Randflanschabschnitte bzw. die Enden des Randflansches einander überlappen und dort miteinander verbunden sein können.

Durch die Verbindung, die direkt oder indirekt durch den Innenbecher erfolgen kann, wird der Verpackungsbehälter nochmals stabilisiert und verstärkt.

Eine weitere sehr vorteilhafte Ausgestaltung der Erfindung liegt vor, wenn die Abschnitte des Verpackungsbehälters miteinander versiegelt, verklebt, verhakt, verschränkt ausgebildet sind oder aneinander stoßen.

Damit wird ein sehr stabiler Verpackungsbehälter, insbesondere ein sehr stabiles Außenteil geschaffen.

Eine vorteilhafte Fortbildung der Erfindung liegt vor, wenn Öffnungen vorgesehen sind, durch welche hindurch der Innenbecher in das Außenteil hinein tiefgezogen werden kann.

Hiermit wird der Tiefziehvorgang deutlich erleichtert.

Dabei hat es sich als sehr vorteilhaft erwiesen, wenn die Öffnungen als Löcher im Übergangsbereich zwischen Boden und Wand ausgebildet sind.

Hierdurch wird die Stabilität des Außenteils nur unwesentlich beeinflusst und es werden sehr gute Tiefziehergebnisse erzielt.

Ebenfalls sehr vorteilhaft ist es erfindungsgemäß, wenn die Öffnungen als Nadelung, Stanzung oder Schnitte im Boden und/oder in der Wandung ausgebildet sind.

Diese Öffnungen sind sehr leicht vorsehbar und sorgen ebenfalls dafür, daß sehr gute Tiegziehergebnisse des Innenbechers erzielt werden.

Weiterhin hat es sich als besonders vorteilhaft erwiesen, wenn die Verpackung wenigstens in Teilbereichen aus luftdurchlässigem Karton gefertigt ist und hierdurch der Innenbecher in das Außenteil hinein tiefgezogen ist.

Durch den luftdurchlässigen Karton kann der Innenbecher durch Anlegen eines Unterdruckes hinein tiefgezogen werden. Alternativ kann im Innenbecher ein Überdruck angelegt werden. Überschüssige Luft im Außenbehälter entwicht dann durch den luftdurchlässigen Karton. Der Luftdurchlässige Karton kann beispielsweise den Boden einnehmen, Teilbereiche des Bodens einnehmen oder auch im Bereich der Seitenwand vorgesehen sein.

Eine weitere sehr vorteilhafte Fortbildung der Erfindung liegt auch vor, wenn eine Grifflasche, eine Aufreißlinie oder dergleichen zum Trennen des Außenteils vom Innenbecher vorgesehen ist.

Damit wird eine leichte Trennung oder gar Zwangstrennung von Außenteil und Innenbecher sichergestellt.

Ein sehr vorteilhaftes Verfahren zur Herstellung eines erfindungsgemäßen Verpackungsbehälters liegt vor, wenn ein vorgeformter Außenbehälter in eine bestehende Tiefziehform eingelegt und dahinein der Innenbecher tiefgezogen wird oder daß ein Zuschnitt eines Außenbehälters in eine bestehende Tiefziehform eingebracht, dabei geformt und dann der Innenbecher in diesen hinein tiefgezogen wird.

Hierdurch können bestehende Tiefziehanlagen zur Becherherstellung auch für den erfindungsgemäßen Verpackungsbehälter genutzt werden. Es ist dabei sowohl möglich mit vorgefertigten Außenbehältern, Zuschnitten oder teilaufgerichteten Behältern zu arbeiten.

Im forlgenden wird die Erfindung anhand mehrerer Ausführungsbeispiele veranschaulicht.

Dabei zeigen:
- Fig. 1: ein Schaubild eines erfindungsgemäßen Verpackungsbehälters in Becherform,

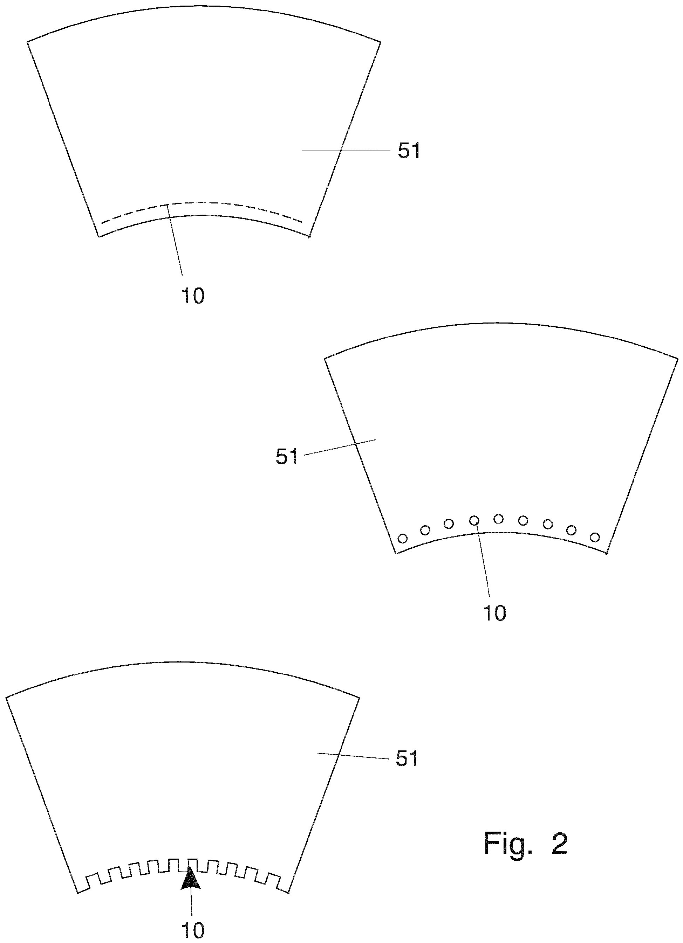

- Fig. 2: eine Darstellung eines Becherzuschnittes mit verschiedenen Varianten von Öffnungen zum Tiefziehen im Boden des Außenbehälters,

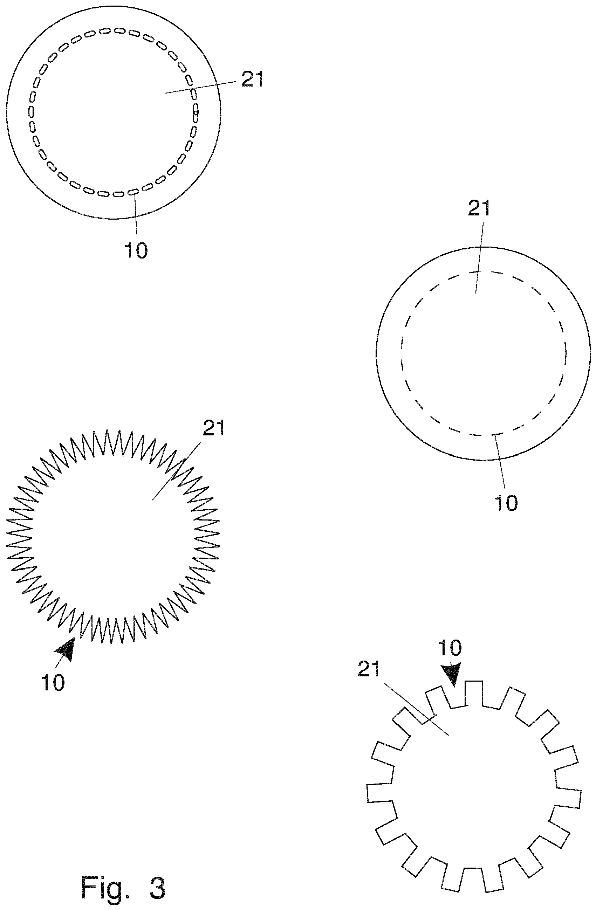

- Fig. 3: eine Darstellung eines Becherzuschnittes mit verschiedenen Varianten von Öffnungen zum Tiefziehen in der Wand des Außenbehälters,
- Fig. 4: eine Darstellung mehrerer Randflanschvarianten,

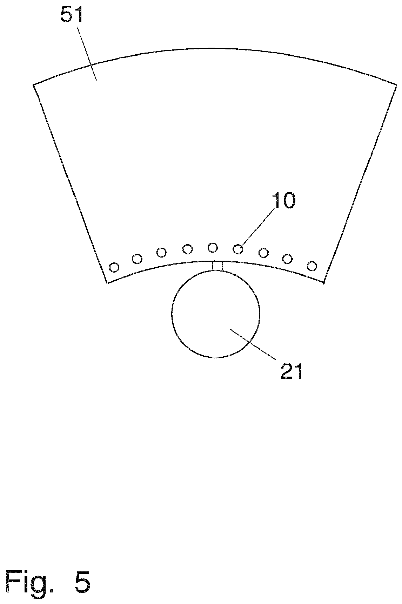

- Fig. 5: eine Darstellung eines einteiligen Zuschnitts eines Außenbehälters zum Wickeln, und
- Fig. 6: eine Darstellung eines einteiligen Becherzuschnittes, welcher gefaltet wird.

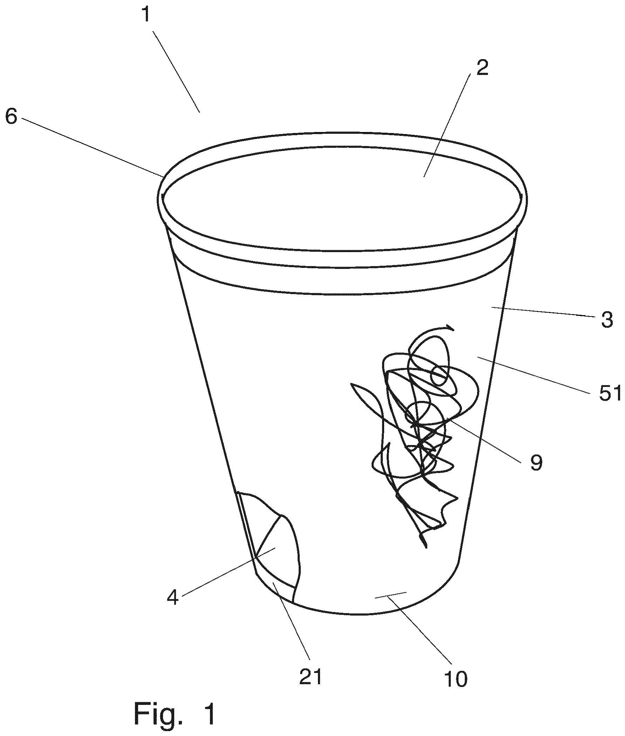

Mit 1 ist in Fig. 1 ein becherförmiger Verpackungsbehälter bezeichnet, der einen Innenbecher 2 und einen darum herum angeordneten Außenbehälter 3 aufweist.

Der Innenbecher 2 besteht gemäß diesem Ausführungsbeispiels dabei aus einem wenigstens annähernd runden Boden 4 und einer daran anschließenden, umlaufenden Seitenwand 5. Am vom Boden 4 abgewandten Ende der Seitenwand 5 ist ein nach außen stehender Siegelrand 6 vorgesehen.

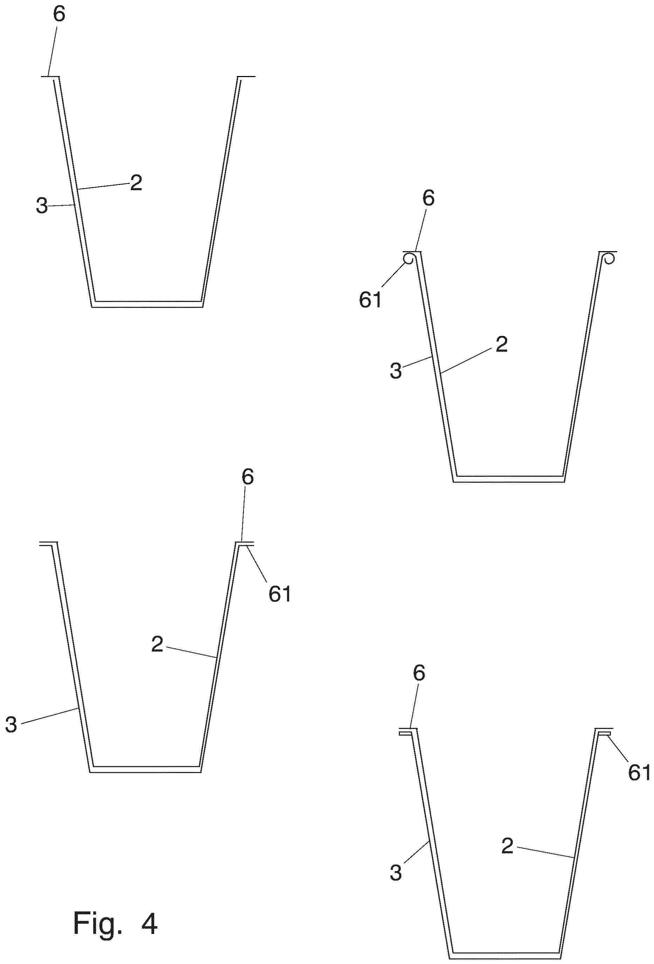

Es ist auch denkbar, daß anstelle des Siegelrandes 6 eine Verdickung oder eine Mundrolle vorgesehen sein kann. Verschiedene Varianten des Siegelrandes 6 sind in Fig. 4 dargestellt, wobei sowohl ein Siegelrand des Innenbechers 2 als auch ein Randflansch des Außenbehälters 3 vorgesehen sein kann.

Sowohl auf die Verdickung als auch auf die Mundrolle kann eine Deckelfolie aufgesiegelt sein. Es ist aber auch denkbar, daß ein Schnappdeckel vorgesehen ist, der sich am Siegelrand 6, an der Verdickung und/oder an der Mundrolle abzustützen vermag und/oder hinter diese greift und sich so verriegelt.

Der Becher kann aus verschiedenen Materialien hergestellt sein. Nachwachsende und/oder biologisch abbaubare Polymere können Verwendung finden.

Hierfür sind Materialien wie PS, PE, PP, PET, PVC, aber auch Stärkepolymere, Polymilchsäure (PLA) oder andere Materialien denkbar. Insbesondere denkbar sind andere natürliche oder künstliche Polymere

Der Außenbehälter 3 umschließt im in Fig. 1 dargestellten Ausführungsbeispiel den Innenbecher 2 hinsichtlich Seitenwand 5 und Boden 4 vollständig.

Der Außenbehälter 3 ist ein oder mehrteilig gefertigt. So sind Ausgestaltungen denkbar, bei denen die Wand 51 des Außenbehälters 3 durch Wickeln gebildet und ein eingesetzter Boden 21 vorgesehen ist. Wahlweise kann der Boden 21 auch über eine Faltlinie an der Wand angelenkt sein. Der Boden 21 kann dabei beispielsweise durch eine Umbördelung mit der Wand 5 verbunden sein. Zusätzliches Kleben ist denkbar.

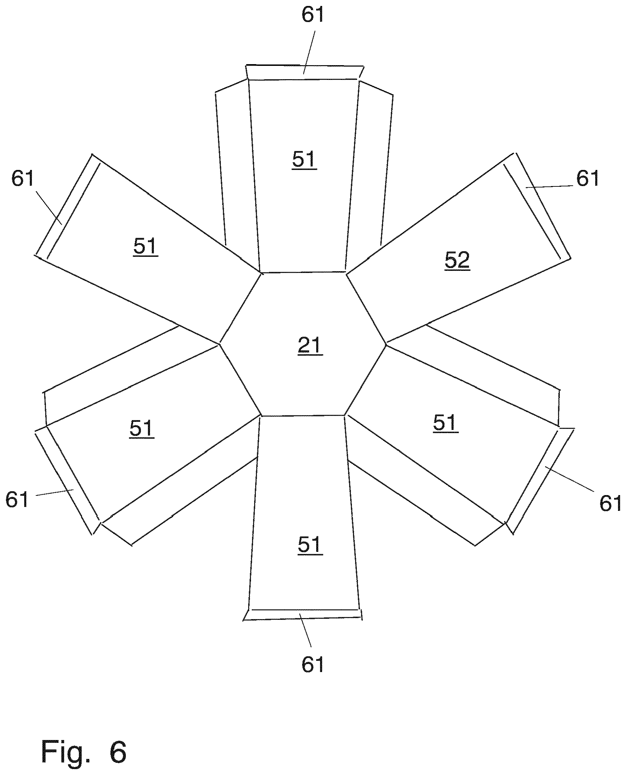

Ebenso sind Ausgestaltungen denkbar, bei denen ein Faltschachtelzuschnitt vorgesehen ist, das heisst, ein ein-oder mehrteiliger Zuschnitt, der beim Aufrichten zur gewünschten becher- oder schalenförmigen Verpackung aufgefaltet wird. Ein entsprechender Zuschnitt ist in Fig. 6 dargestellt. Die Stoßstellen können dabei beispielsweise mittels Verbindungslappen miteinander verklebt sein. Andere Verbindungen mit siegeln, verhaken oder rasten sind denkbar.

Der Außenbehälter 3 stabilisiert und festigt die Seitenwand 5 des Innenbechers 2.

Der Außenbehälter 3 ist aus Papier, Pappe, Karton oder vergleichbaren Materialien hergestellt und kann auch Recyclingmaterialien enthalten. Dabei kann der Außenbehälter 3 auch mehrlagig ausgebildet sein. Der Außenbehälter 3 ist vergleichsweise unkritisch in Bezug auf Lebensmitteltauglichkeit, da das Füllgut nicht mit dem Außenteil in Kontakt kommt.

Auf der Außenseite des Außenbehälters 3 kann ein Druckbild 9 vorgesehen werden. Um ein hochwertiges Druckbild 9 zu erhalten, kann die Außenseite mit einem besonders glatten und gut bedruckbaren Material beschichtet sein. Es sind hier beispielsweise Feinkartone und -papiere denkbar.

Gerade an den Kanten des Außenbehälters 3 besteht die Gefahr, daß dort Feuchtigkeit, Flüssigkeit oder auch Fette eindringen können, da dort meistens offene Schnittkanten vorliegen.

Gerade in diesen Bereichen kann die Schutzbeschichtung vorgesehen sein. Es ist aber auch denkbar, daß die Kanten des Außenbehälters 3 nach innen umgefaltet sind und so die Schnittkanten geschützt werden und so das Eindringen von Feuchtigkeit, Flüssigkeit oder dergleichen vermieden wird.

In diesem Zusammenhang ist es auch denkbar, daß der Außenbehälter 3 durch eine entsprechende Ausrüstung wenigstens für eine definierte Zeitdauer Resistenzeigenschaften gegenüber diesen Stoffen aufweist. Dies kann beispielsweise auch durch eine Imprägnierung oder eine enstprechende Materialauswahl sichergestellt werden.

Der Außenbehälter 3 kann eine Sollbruchstelle aufweisen, an der sich der Außenbehälter 3 öffnen und vom Innenbecher 2 trennen lässt.

Innenbecher 2 und Außenbehälter 3 können dann dann getrennt voneinander der Entsorgung zugeführt werden.

Bei entsprechender konstruktiver Ausgestaltung kann auch eine Zwangstrennung beim Öffnen der Verpackung realisiert werden. So ist es beispielsweise denkbar, daß beim Abziehen einer aufgesiegelten Deckelfolie bereits die Trennung von Außenbehälter 3 und Innenbecher 2 eingeleitet wird. Durch eine Zwangstrennung wird die Bereitschaft zur getrennten Entsorgung deutlich erhöht.

Der Außenbehälter 3 kann am oberen Ende seiner Wand einen Randflansch 61, eine Verdickung 61 oder auch eine Mundrolle 61 aufweisen, welche den Innenbecher 2 stabilisiert. Diese Varianten sind in Fig. 4 dargestellt.

Zudem wird damit die Versiegelung des Innenbechers 2 mit einem Deckel oder das Aufsetzen eines Schnappdeckels erleichtert und sichergestellt, daß diese fest und sicher sitzt.

Der Innenbecher 2 wird im Tiefziehverfahren hergestellt. Anstatt eines Bechers im klassischen Sinn kann auch eine Schale oder ein mehreckiger Verpackungsbehälter ausgebildet werden.

Insgesamt ist der Innenbecher 2 erfindungsgemäß weich bzw. wenig steif ausgebildet, da mit sehr geringen Materialstärken beim Tiefziehen gearbeitet wird. Andererseits kann dies auch eine Folge der Materialauswahl sein.

Ziel der Erfindung ist es, möglichst wenig nicht oder schlecht biologisch abbaubare und/oder nachwachsende Rohstoffe einzusetzen, aber dennoch den bekannten Komfort und die gewünschte Stabilität der Behälter zu erzeugen.

Deswegen werden die Wandstärken des Innenbechers 2 reduziert. Zusätzlich ist es denkbar, daß der Innenbecher 2 wenigstens weitgehend aus nachwachsenden und/oder biologisch abbaubaren Rohstoffen hergestellt.

Solche Rohstoffe sind jedoch sehr teuer, da diese besondere Eigenschaften vor allem im Hinblick auf Lebensmittelverträglichkeit und/oder Barriereeigenschaften aufweisen müssen. Dies ist damit ein weiterer Grund, diese Materialien möglichst sparsam einzusetzen.

Um nun eine gute Herstellbarkeit des Verpackungsbehälters sicherzustellen sind am unteren Ende der Wand des Außenbehälters 3 Öffnungen 10 vorgesehen, durch die hindurch der Innenbecher 2 tiefgezogen ist. Auch wenn der Innenbecher 2 tiefgedrückt wird, kann überschüssige Luft durch diese Öffnungen 10 entweichen.

Die Öffnungen 10 sind dabei, wie gerade beschrieben, am unteren Rand der Wand des Außenbehälters 3 angeordnet und meist regelmäßig über den Umfang verteilt. Alternativ oder zusätzlich können auch Öffnungen 10 im Boden 21 des Außenbehälters 3 vorgesehen sein.

Die Öffnungen 10 können dabei als Ausnehmungen, Ausstanzungen, Schnitte oder Nadelungen ausgebildet sein.

Auch denkbar ist, daß der untere Abschluß der Seitenwand des Außenbehälters 3 unregelmäßig, beispielsweise als Sägezahn oder Zahnreihe geformt ist und sich beim Verbinden mit dem Boden 21 die entsprechenden Öffnungen 10 ergeben.

Ebenso denkbar ist, daß der Boden 21 eine Begrenzung als Sägezahn oder Zahnreihe aufweist und bei der Verbindung mit der Seitenwand sich die Öffnungen 10 ergeben.,

Desweiteren ist es denkbar, daß der Außenbehälter 3 in Teilbereichen aus einem luftdurchlässigen Karton, einem sogenannten Blisterkarton gefertigt ist oder Abschnitte dieses Kartons aufweist.

So kann beispielsweise der Boden 21 aus diesem luftdurchlässigen Karton bestehen, so daß auf sichtbare Öffnungen 10 verzichtet werden kann. Der luftdurchlässige Karton übernimmt die Aufgabe der Öffnungen.

Die erfindungsgemäße Verpackung kann auf herkömmlichen Tiefziehmaschinen für die Becherherstellung hergestellt werden.

Hierzu wird ein vorgefertigter Außenbehälter 3 in die Tiefziehform eingelegt und dann der Innenbecher 2 in diesen hinein tiefgezogen.

Auch denkbar ist es, daß der Außenbehälter 3 erst beim Einlegen in die Tiefziehform aus dem jeweiligen Zuschnitt gebildet wird.

Es ist dabei denkbar, daß zunächst der Verpackungsbehälter gefertigt, dieser dann zu einem Abfüller transportiert, dort gefüllt und verschlossen wird.

Ebenso denkbar ist es, daß ein sogenanntes Form-Fill-Seal - Verfahren etabliert wird. Dabei wird der Verpackungsbehälter gebildet, auf der Maschine befüllt und direkt verschlossen, beispielsweise durch Aufsiegeln einer Deckelfolie. Dies kann sowohl mit vorgefertigten Außenbehältern 3 als auch mit erst in der Tiefziehmaschine aufzurichtenden Außenbehältern 3 realisiert werden.

## Patentansprüche

1. Schalen- oder becherförmiger Vepackungsbehälter aus Karton, hergestellt aus einem ein oder mehrteiligen Kartonzuschnitt als Außenteil, **dadurch gekennzeichnet, daß** ein Innenbecher aus einem thermoformbaren und/oder tiefziehbaren Material vorgesehen ist, wobei als Material vorzugsweise ein aus nachwachsenden und/oder biologisch abbaubaren Rohstoffen hergestelltes Material vorgesehen ist und daß das Außenteil den Innenbecher am Umfang und am Boden umschließt.

2. Verpackungsbehälter nach Anspruch 1, **dadurch gekennzeichnet, daß** der Innenbecher aus einem Polymer, insbesondere aus PS, PE, PP, PET, PVC, Stärkepolymeren, Polymilchsäure oder anderen natürlichen oder künstlichen Polymeren ein- oder mehrschichtig auch in Kombination mit Barriereschichtem, Lacken oder dergleichen hergestellt ist.

3. Verpackungsbehälter nach Anspruch 1 oder 2, **dadurch gekennzeichnet, daß** der Verpackungsbehälter einen Boden und eine oder mehrere Seitenwände aufweist, wobei das Außenteil den Innenbecher umgreift.

4. Verpackungsbehälter nach einem der vorangehenden Ansprüche, **dadurch gekennzeichnet, daß** wenigstens eine Kante des Außenteils umgefaltet ausgebildet ist.

5. Verpackungsbehälter nach einem der vorangehenden Ansprüche, **dadurch gekennzeichnet, daß** wenigstens eine Kante des Außenteils abgedichtet und/oder feuchtigkeits-, flüssigkeits- und/oder fettunempfindlich ausgerüstet ist.

6. Verpackungsbehälter nach einem der vorangehenden Ansprüche, **dadurch gekennzeichnet, daß** der Innenbecher in das Außenteil hinein tiefgezogen ausgebildet ist und die Kombination aus Innenbecher und Außenteil erst einen stabilen Verpackungsbehälter bildet.

7. Verpackungsbehälter nach einem der vorangehenden Ansprüche, **dadurch gekennzeichnet, daß** das Außenteil als Bogensegment und einem damit verbundenen Boden ausgebildet ist.

8. Verpackungsbehälter nach einem der vorangehenden Ansprüche, **dadurch gekennzeichnet, daß** das Außenteil aus einer Bodenwand mit wenigstens einem daran angelenkten Seitenwandlappen ausgebildet ist.

9. Verpackungsbehälter nach Anspruch 8, **dadurch gekennzeichnet, daß** zwischen Bodenwandlappen und Seitenwandlappen oder zwischen nebeneinander liegenden Seitenwandlappen Verschlußstreifen vorgesehen sind, mit denen diese nebeneinander liegenden Lappen miteinander verbunden werden können.

10. Verpackungsbehälter nach Anspruch 7, 8 oder 9, **dadurch gekennzeichnet, daß** am vom Boden abgewandten Ende der Seitwand bzw. der Seitenwandlappen ein Randflansch bzw. Randflanschabschnitt vorgesehen ist.

11. Verpackungsbehälter nach Anspruch 10, **dadurch gekennzeichnet, daß** mehrere nebeneinander liegende Randflanschabschnitte bzw. die Enden des Randflansches einander überlappen und dort miteinander verbunden sein können.

12. Verpackungsbehälter nach einem der vorangehenden Ansprüche, **dadurch gekennzeichnet, daß** die Abschnitte des Verpackungsbehälters miteinander versiegelt, verklebt, verhakt, verschränkt ausgebildet sind oder aneinander stoßen.

13. Verpackungsbehälter nach einem der vorangehenden Ansprüche, **dadurch gekennzeichnet, daß** Öffnungen vorgesehen sind, durch welche hindurch der Innenbecher in das Außenteil hinein tiefgezogen werden kann.

14. Verpackungsbehälter nach Anspruch 13, **dadurch gekennzeichnet, daß** die Öffnungen als Löcher im Übergangsbereich zwischen Boden und Wand ausgebildet sind.

15. Verpackungsbehälter nach Anspruch 13 oder 14, **dadurch gekennzeichnet, daß** die Öffnungen als Nadelung, Stanzung oder Schnitte im Boden und/oder in der Wandung ausgebildet sind.

16. Verpackungsbehälter nach einem der vorangehenden Ansprüche, **dadurch gekennzeichnet, daß** die Verpackung wenigstens in Teilbereichen aus luftdurchlässigem Karton gefertigt ist und hierdurch der Innenbecher in das Außenteil hinein tiefgezogen ist.

17. Verpackungsbehälter nach einem der vorangehenden Ansprüche, **dadurch gekennzeichnet, daß** eine Grifflasche, eine Aufreißlinie oder dergleichen zum Trennen des Außenteils vom Innenbecher vorgesehen ist.

18. Verfahren zur Herstellung eines Verpackungsbehälters nach einem der vorangehenden Ansprüche, **dadurch gekennzeichnet, daß** ein vorgeformter Außenbehälter in eine bestehende Tiefziehform eingelegt und dahinein der Innenbecher tiefgezogen wird oder daß ein Zuschnitt eines Außenbehälters in eine bestehende Tiefziehform eingebracht, dabei geformt und dann der Innenbecher in diesen hinein tiefgezogen wird.
